# EUROPÄISCHE PATENTANMELDUNG

(11) **EP 2 420 320 A1**
(43) Veröffentlichungstag der Anmeldung: **22.02.2012**
(21) Anmeldenummer: 10172874.9
(22) Anmeldetag: 16.08.2010
(51) Int. Cl.: B02C 4/30, B02C 4/06, B02C 4/42, B02C 4/38, A47J 42/32

(54) **Kaffeewalzenmühle**

(71) Anmelder: Bauermeister Zerkleinerungstechnik GmbH, 22844 Norderstedt (DE)
(72) Erfinder: Holl, Wolfgang, 21720 Guderhandviertel (DE); Simon, Günter, 22397 Hambrug (DE)
(74) Vertreter: Patentanwälte ter Smitten Eberlein Rütten Partnerschaftsgesellschaft

(57) **Zusammenfassung**

Die vorliegende Erfindung betrifft eine Kaffeewalzenmühle sowie ein Verfahren zur Mahlung von Kaffee und eine Verwendung von Mahlwalzen (1, 2) zur Mahlung von Kaffee.

Zur Zermahlung von Kaffee werden üblicherweise Metallwalzen eingesetzt, die einer starken Abnutzung ausgesetzt sind und den Geschmack des Kaffees nachteilig beeinflussen.

Aufgabe der Erfindung ist es, eine Kaffeewalzenmühle, ein Verfahren zur Mahlung von Kaffee sowie eine entsprechende Verwendung anzugeben, die diese Nachteile vermeidet. Gelöst wird dies durch eine Kaffeewalzenmühle mit gegenläufigen Mahlwalzen (1, 2) mit Granitoberflächen bei einem Walzenumfangsgeschwindigkeitsverhältnis von 1:1,5 bis 1 :4, sowie durch eine entsprechende Verwendung und ein entsprechendes Verfahren.

## Beschreibung

Die vorliegende Erfindung betrifft eine Kaffeewalzenmühle sowie ein Verfahren zum Mahlen von Kaffee und eine Verwendung einer Walzenmühle zum Mahlen von Kaffee.

Walzenmühlen sind aus dem Stand der Technik zahlreich bekannt. Auch ist es bekannt, Walzenmühlen zum Mahlen von Kaffee zu verwenden.

Zu unterscheiden sind dabei Walzenmühlen mit zwei Walzen und sogenannte Dreiwalzwerke.

Dreiwalzwerke, die sich dadurch auszeichnen, dass sie drei Walzen mit zwei dazwischen liegenden Mahlspalten aufweisen, können lediglich für das Zerkleinern von zähflüssigen Flüssigkeiten oder Pasten eingesetzt werden, da ihr Prinzip darauf basiert, dass die Masse an der Unterseite der mittleren Walze haftend zum zweiten Mahlspalt transportiert wird. Solche Dreiwalzwerke werden beispielsweise zur Schokoladenherstellung verwendet. Dabei kommen verschiedenste Walzen zum Einsatz. So sind bei Dreiwalzwerken beispielsweise Metall- oder Steinwalzen bekannt.

Da Dreiwalzwerke allein mit pastösen Massen, die an der Unterseite der mittleren Walze haften, betrieben werden können, sind die hier auftretenden Mahlkräfte vergleichsweise gering. Sie erzielen eher eine Homogenisierung, Entlüftung, Dispersion und/oder Feinverreibung denn eine Zerkleinerung.

Es sind auch Walzwerke bekannt, bei denen lediglich zwei Rollen eingesetzt werden, die die zu homogenisierende pastöse Masse aus einem Vorratsbehältnis von unten nach oben durch den Mahlspalt hindurch ziehen. Auch hier ist es unerlässlich, dass die pastöse Masse eine gewisse Haftung an den Mahlwalzen aufweist. Sie erzielen ebenfalls eher eine Homogenisierung, Entlüftung, Dispersion und/oder Feinverreibung denn eine Zerkleinerung.

Übliche Walzenmühlen zur Zerkleinerung weisen hingegen zwei Mahlwalzen mit einem dazwischen liegenden Mahlspalt auf und werden von oben mit der zur Zerkleinerung vorgesehenen Substanz beschickt. Mahlwalzen dieser Mühlen sind in der Regel aus Metall gefertigt. Insbesondere bei der Kaffeevermahlung ist es üblich, Metallmahlwalzen einzusetzen. Dabei sind solche Mahlwalzen in der Regel an der Oberfläche strukturiert. So weisen sie vorzugsweise Rillen auf. Durch derartige Rillen wird das Einzugsverhalten verbessert und die Zermahlung effizienter. Dabei ist es auch bekannt, die Mahlwalzen so anzutreiben, dass die erste Mahlwalze eine von der zweiten Mahlwalze unterschiedliche Walzenumfangsgeschwindigkeit aufweist. Bei solchen Walzenmühlen zur Zerkleinerung soll ein Anhaften der zu zerkleinernden Substanz gerade verhindert werden.

Die zur besonders effizienten Zermahlung von Kaffee auf den Oberflächen der Mahlwalzen vorgesehen Rillen und Strukturen werden jedoch durch die trockene Zermahlung stark beansprucht und müssen daher in regelmäßigen Abständen aufwendig erneuert werden.

Der Erfinder hat nun festgestellt, dass der Kaffee bei der Zermahlung mit den herkömmlichen Mahlwalzen geschmacklich beeinträchtigt wird.

Somit ist es Aufgabe der Erfindung, eine Kaffeemühle bzw. ein Verfahren zur Zermahlung von Kaffee bzw. eine entsprechende Verwendung anzugeben, die eine geschmackliche Beeinträchtigung des Kaffees vermeidet und gleichzeitig eine effiziente Zermahlung des Kaffees ermöglicht ohne dabei aufwendige Erneuerungsarbeiten an den Mahlwalzen erforderlich zu machen.

Die Aufgabe wird gelöst durch eine Kaffeewalzenmühle gemäß Anspruch 1, ein Verfahren zur trockenen Mahlung von Kaffee gemäß Anspruch 8 sowie eine entsprechende Verwendung gemäß Anspruch 15. Die abhängigen Unteransprüche 2 bis 7 und 9 bis 14 geben vorteilhafte Weiterbildungen an.

Die Aufgabe wird dabei auch für die Zermahlung von Kaffee zu feinstem Kaffeepulver mit einer Teilchengrößenverteilung mit einem D1-Wert von 100 µm, insbsondere 70 µm und weniger gelöst. In diesem Bereich arbeitet die erfindungsgemäße Lösung sogar besonders effektiv.

Eine erfindungsgemäße Kaffeewalzenmühle zur trockenen Mahlung von Kaffee gemäß Anspruch 1 weist eine erste und eine zweite parallel zueinander und mit einem dazwischen liegenden Mahlspalt angeordnete Mahlwalze zum Mahlen von Kaffee sowie eine Antriebsvorrichtung zum gegenläufigen Antreiben der ersten und zweiten Mahlwalze in einem Walzenumfangsgeschwindigkeitsverhältnis von 1:1,5 bis 1:4 auf. Dabei weisen die Mahlwalzen eine Oberfläche aus Granit auf.

Durch die Wahl einer entsprechenden Anordnung der Mahlwalzen mit einer Oberfläche aus Granit kann eine besonders effiziente Kaffeezermahlung durchgeführt werden. Dabei wird der Kaffee in seinem Geschmack nicht beeinträchtigt. Die Mahlwalzen, die insbesondere bei der Zermahlung zu feinstem Kaffeepulver in eine intensive Berührung mit dem Kaffee gebracht werden, sind, wenn die Oberfläche aus Granit ausgebildet ist, geschmacksneutral.

Granit weist homogen verteilte harte und weiche Kornzonen auf, die bei einer Zermahlung von trockenem Kaffee unterschiedlich verschleißen und das Material dadurch griffig machen, sodass eine Aufarbeitung, wie sie im Stand der Technik bekannt und erforderlich ist, entfallen kann.

Gepaart mit einer hohen Walzenumfangsgeschwindigkeitsdifferenz wird dadurch eine effektive Kaffeezermahlung ohne Beeinflussung des Geschmacks durchführbar.

Dabei ist der Mahlspalt der Spalt, der zwischen der ersten und der zweiten Mahlwalze liegt. Die Mahlspaltweite ist an der engsten Stelle des Mahlspaltes zwischen den Mahlwalzen zu bestimmen. Die Mahlwalzen können bei einer erfindungsgemäßen Kaffeewalzenmühle vollständig aus Granit ausgebildet sein. Allerdings kann es vorteilhaft sein, lediglich eine Oberfläche aus Granit vorzusehen. Dies kann die Kosten senken und die Langlebigkeit der Mahlwalzen erhöhen, wenn beispielsweise ein gegenüber der Granitoberfläche weicherer Kern vorgesehen wird. Verfahren zur Herstellung solcher Mahlwalzen mit einer Oberfläche aus Granit sind aus dem Stand der Technik für die Zermahlung bzw. Homogenisierung von pastösen Massen zahlreich bekannt.

Unter einer Antriebsvorrichtung zum gegenläufigen Antreiben der Mahlwalzen ist eine Antriebsvorrichtung zu verstehen, die die Mahlwalzen so antreibt, dass sich ihr Umfang im Mahlspalt in die gleiche Richtung, also entweder nach oben oder nach unten bewegt. Dies bedeutet, dass eine Mahlwalze im Uhrzeigersinn und eine im Gegenuhrzeigersinn zu laufen hat. Als Antriebsvorrichtung sind jegliche Antriebsvorrichtungen einsetzbar. Hier sind beispielsweise Zahnradantriebe, Riemen- oder Kettenantriebe oder direkte Antriebe, beispielsweise durch einen Elektromotor, denkbar. Durch den Unterschied in den Walzenumfangsgeschwindigkeiten werden Scherkräfte erzeugt.

Vorteilhafterweise weist eine Kaffeewalzenmühle gemäß Anspruch 2 Mahlwalzen mit einer Oberfläche aus feinkörnigem Granit auf. Im Gegensatz zu Mahlwalzen mit Oberflächen aus grobkörnigem Granit kann dadurch eine besonders feine und gleichmäßige Zermahlung erzielt werden.

Mit Vorteil wird die Oberfläche der Mahlwalzenmühlen gemäß Anspruch 3 aus Haselberger Granit gebildet. Dieser Granit hat sich als besonders vorteilhaft für eine homogene und effiziente Zermahlung von Kaffee herausgestellt.

Mit Vorteil weisen die Mahlwalzen der Kaffeewalzenmühle eine glatte Oberfläche auf. Dies setzt voraus, dass die Fläche der Mahlwalzen nicht durch strukturierende Verfahren mit speziellen Strukturen versehen wurde, wie dies bei Mahlwalzen aus Metall im Stand der Technik üblich ist. Der Verzicht auf derartige Strukturierungen macht nicht nur die Herstellung einfacher, sondern lässt auch die ansonsten erforderliche Aufarbeitung der Struktur entfallen. Darüber hinaus kann durch die Verwendung der glatten Mahlwalze insbesondere bei Herstellung von feinstem Kaffeepulver mit D1-Wert von höchstens 100 µm (63 % der Teilchen kleiner als 100 µm), insbesondere 70 µm, eine besonders effiziente Zermahlung erzielt werden.

Vorteilhafter Weise weist der Mahlspalt, insbesondere bei der Herstellung von feinsten Kaffeepulvern, eine Mahlspaltweite von 0,03 bis 0,05 mm auf.

Durch die Wahl der Walzenumfangsgeschwindigkeiten und der Mahlspaltweite kann die Teilchenverteilung des zermahlenen Pulvers sowie die Effizienz der Zermahlung beeinflusst werden. Dabei hat sich ein Mahlspalt in der genannten Weite als besonders vorteilhaft herausgestellt.

Vorteilhafter Weise ist die Kaffeewalzenmühle gemäß Anspruch 7 so eingerichtet, dass sie Kaffeepulver mit einem D1-Wert von höchstens 100 µm, insbesondere höchstens 70 µm ausgibt. Eine solche Einstellung kann durch die Wahl der Mahlspaltweite und der Walzenumfangsgeschwindigkeiten durch den Fachmann erfolgen. Bei der Herstellung eines solchen feinsten Kaffeepulvers ist die erfindungsgemäße Kaffeewalzmühle besonders effizient.

Gelöst wird die Aufgabe auch durch ein Verfahren zur trockenen Mahlung von Kaffee gemäß Anspruch 1, umfassend die Schritte Bereitstellen einer ersten und einer zweiten Mahlwalze, paralleles Anordnen der ersten und zweiten Mahlwalze mit einem Mahlspalt zwischen der ersten und der zweiten Mahlwalze, gegenläufiges Antreiben der ersten und zweiten Mahlwalze in einem Walzenumfangsgeschwindigkeitsverhältnis von 1 :1,5 bis 1:4 und Eingeben des Kaffees in den Mahlspalt, insbesondere von oben. Dabei sind die erste und die zweite Mahlwalze so zu wählen, dass sie eine Oberfläche aus Granit aufweisen. Bei einem solchen Verfahren werden die oben geschilderten Vorteile erzielt. Der Kaffee wird dabei vorteilhafter Weise von oben zwischen die Mahlwalzen gegeben.

Mit besonderem Vorteil wird das Verfahren gemäß Anspruch 13 so betrieben, dass die Oberflächen der ersten und zweiten Mahlwalze durch den Mahlvorgang aufgeraut werden. Dies ist möglich, da Granit homogen verteilte, harte und weiche Kornzonen aufweist, die unterschiedlich abgenutzt werden und dadurch der Oberfläche eine gewisse Rauheit verleihen, die durch die Mahlung des Kaffees hervorgerufen wird.

Durch eine solche leichte Aufrauung der Oberfläche kann ein besonders gutes Einzugsverhalten und eine besonders effektive Mahlung erzielt werden.

Gelöst wird die Aufgabe auch durch eine Verwendung gemäß Anspruch 15, bei der eine erste und eine zweite parallel zueinander mit einem dazwischen liegenden Mahlspalt angeordnete Mahlwalze zum Mahlen von Kaffee verwendet werden. Dabei werden die Mahlwalzen gegenläufig in einem Walzenumfangsgeschwindigkeitsverhältnis von 1:1,5 bis 1:4 angetrieben. Die verwendeten Mahlwalzen weisen dabei eine Granitoberfläche auf.

Durch eine solche Verwendung lassen sich die oben geschilderten Vorteile verwirklichen. Die Mahlwalzen bzw. die Anordnung der Mahlwalzen sind dabei vorteilhafter Weise so gewählt, wie dies in den Unteransprüchen 2 bis 7 beschrieben ist.

Die vorliegende Erfindung wird im Folgenden anhand der rein schematischen Zeichen beispielhaft erläutert. Dabei zeigt:

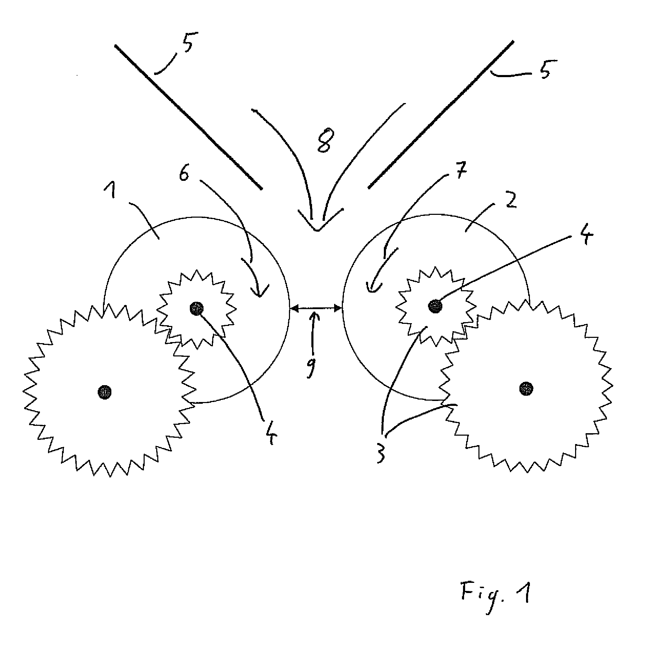

Fig. 1 eine seitliche Ansicht auf eine erfindungsgemäße Kaffeewalzenmühle.

Figur 1 zeigt eine seitliche Ansicht einer erfindungsgemäßen Kaffeewalzenmühle. Zu erkennen sind eine erste Mahlwalze 1, eine zweite Mahlwalze 2, eine Schüttvorrichtung 5 und Zahnräder 3.

Die erste Mahlwalze 1 und die zweite Mahlwalze 2 sind so angeordnet, das zwischen ihnen ein Mahlspalt 9 ausgebildet ist. Die erste Mahlwalze 1 und die zweite Mahlwalze 2 sind auf jeweils einer Welle 4 gelagert, um die sie drehen können. Des Weiteren sind Zahnräder 3 zum Antrieb der Mahlwalzen 1, 2 vorgesehen. Über die Zahnräder werden die erste Mahlwalze 1 in einer ersten Drehrichtung 6 und die zweite Mahlwalze 2 in einer zweiten Drehrichtung 7 angetrieben. Die erste Drehrichtung 6 und die zweite Drehrichtung 7 sind zueinander gegenläufig. Die erste Drehrichtung 6 ist im Uhrzeigersinn, während die zweite Drehrichtung 7 gegen den Uhrzeigersinn läuft. Dadurch sind die erste Drehrichtung 6 und die zweite Drehrichtung 7 so gewählt, dass der Umfang der ersten Mahlwalze 1 und der zweiten Mahlwalze 2 im Mahlspalt 9 eine Bewegung in die gleiche Richtung ausführen. Im Mahlspalt 9 bewegen sich der Umfang der ersten Mahlwalze 1 und der Umfang der zweiten Mahlwalze 2 jeweils nach unten. Als Mahlspaltweite wurden 0,04 mm gewählt. Das Walzenumfangsgeschwindigkeitsverhältnis wurde auf 1 :3 eingestellt.

Über die Schüttvorrichtung 5 wird Kaffee zugeführt. Dieser bildet einen Kaffeestrom 8 aus, der den Kaffee zwischen die Mahlwalzen 1, 2 in den Mahlspalt 9 befördert. Dort wird der Kaffee zermahlen.

Weitere vorteilhafte Ausbildungen sind durch den Fachmann auffindbar und der jeweiligen Aufgabe anpassbar.

### Bezugszeichenliste

- 1: erste Mahlwalze
- 2: zweite Mahlwalze
- 3: Zahnrad
- 4: Welle
- 5: Schüttvorrichtung
- 6: erste Drehrichtung
- 7: zweiter Drehrichtung
- 8: Kaffeestrom
- 9: Mahlspalt

## Patentansprüche

1. Kaffeewalzenmühle zur trockenen Mahlung von Kaffee umfassend
a. eine erste (1) und eine zweite (2) parallel zueinander und mit einem dazwischen liegenden Mahlspalt (9) angeordnete Mahlwalzen zum Mahlen von Kaffee,
b. eine Antriebsvorrichtung zum gegenläufigen Antreiben der ersten und zweiten Mahlwalze (1, 2) in einem Walzenumfangsgeschwindigkeitsverhältnis von 1:1,5 bis 1:4
**dadurch gekennzeichnet, dass** die Mahlwalzen (1, 2) eine Oberfläche aus Granit aufweisen.

2. Kaffeewalzenmühle nach Anspruch 1, **dadurch gekennzeichnet, dass** die Oberfläche aus feinkörnigem Granit aufweist.

3. Kaffeewalzenmühle nach einem der vorstehenden Ansprüche, **dadurch gekennzeichnet, dass** der Granit Haselberger Granit ist.

4. Kaffeewalzenmühle nach einem der vorstehenden Ansprüche, **dadurch gekennzeichnet, dass** die Mahlwalzen (1, 2) eine glatte Oberfläche aufweisen.

5. Kaffeewalzenmühle nach einem der vorstehenden Ansprüche, **dadurch gekennzeichnet, dass** die Oberfläche der Mahlwalzen (1, 2) keine eingeschliffenen Strukturen, insbesondere keine Rillen aufweist.

6. Kaffeewalzenmühle nach einem der vorstehenden Ansprüche, wobei der Mahlspalt (9) eine Mahlspaltweite von 0,03 bis 0,05 mm aufweist.

7. Kaffeewalzenmühle nach einem der vorstehenden Ansprüche, **dadurch gekennzeichnet, dass** die Kaffeewalzenmühle zum Mahlen von Kaffee zu Kaffeepulver mit einem D1-Wert von höchstens 100 µm (63% der Teilchen sind kleiner als 100 µm), insbesondere von höchstens 70 µm, eingerichtet ist.

8. Verfahren zur trockenen Mahlung von Kaffee, umfassend die folgenden Schritte:
a. Bereitstellen einer ersten Mahlwalze (1) und einer zweiten Mahlwalze (2)
b. Paralleles Anordnen der ersten und zweiten Mahlwalze (1, 2) mit einem Mahlspalt (9) zwischen der ersten und der zweiten Mahlwalze
c. Gegenläufiges Antreiben der ersten und zweiten Mahlwalze in einem Walzenumfangsgeschwindigkeitsverhältnis von 1 :1,5 bis 1 :4
d. Eingeben des Kaffees in den Mahlspalt (9)
**dadurch gekennzeichnet, dass** als die erste und die zweite Mahlwalze (1,2) Mahlwalzen mit eine Oberfläche aus Granit verwendet werden.

9. Verfahren nach Anspruch 8, wobei der Mahlspalt (9) auf eine Mahlspaltweite von 0,03 bis 0,05 mm eingestellt wird.

10. Verfahren nach einem der Ansprüche 8 bis 9, wobei der Kaffee durch Einstellen der Mahlspaltweite und der Walzenumfangsgeschwindigkeiten zu Kaffeepulver mit einem D1-Wert von höchstens 100 µm (63% der Teilchen sind kleiner als 100 µm), insbsondere hächstens 70 µm, gemahlen wird.

11. Verfahren nach einem der Ansprüche 8 bis 10, **dadurch gekennzeichnet, dass** die Oberfläche aus feinkörnigem Granit gebildet ist.

12. Verfahren nach einem der Ansprüche 8 bis 11, **dadurch gekennzeichnet, dass** der Granit Haselberger Granit ist.

13. Verfahren nach einem der Ansprüche 8 bis 12, **dadurch gekennzeichnet, dass** die Oberflächen der ersten und zweiten Mahlwalze (1, 2) durch den Mahlvorgang aufgeraut werden.

14. Verfahren nach einem der Ansprüche 8 bis 13, **dadurch gekennzeichnet, dass** die Oberfläche der Mahlwalzen (1, 2) keine eingeschliffenen Strukturen, insbesondere keine Rillen aufweist.

15. Verwendung einer ersten (1) und einer zweiten (2) parallel zueinander mit einem dazwischen liegendem Mahlspalt (9) angeordneter Mahlwalzen zum Mahlen von Kaffe, wobei die Mahlwalzen (1, 2) gegenläufig in einem Walzenumfangsgeschwindigkeitsverhältnis von 1:1,5 bis 1:4 angetrieben werden, **dadurch gekennzeichnet, dass** eine Granitoberfläche aufweisen.
